# EUROPEAN PATENT APPLICATION

(11) **EP 1 762 926 A2**
(43) Date of publication of application: **14.03.2007**
(21) Application number: 06120188.5
(22) Date of filing: 06.09.2006
(51) Int. Cl.: G06F 3/043

(54) **Method and apparatus to control operation of multimedia device**

(30) Priority: 09.09.2005 KR 20050084241
(71) Applicant: Samsung Electronics Co., Ltd., Seoul 442-742 (KR)
(72) Inventor: Arora, Manish, Gyeonggi-do (KR); Koh, You-kyung, Seoul (KR)
(74) Representative: Robinson, Ian Michael

(57) **Abstract**

A method and apparatus to control an operation of a multimedia device includes detecting an input tapping, detecting a pattern of the detected tapping, and controlling an operation of the multimedia device according to the detected pattern.

## Description

The present general inventive concept relates to a method and apparatus to control an operation of a multimedia device.

In general, a conventional portable multimedia device is controlled using push buttons thereof. Thus, when a user carries the conventional portable multimedia device in a pocket such that push buttons thereof cannot be directly seen to use the device, the user must take the portable multimedia device out of the pocket and push one of the buttons.

Even if a voice recognition or motion detection method may be used to operate the conventional multimedia device, an additional device must be separately installed within a main body of the conventional multimedia device, or the user must directly connect the conventional multimedia device with the additional device.

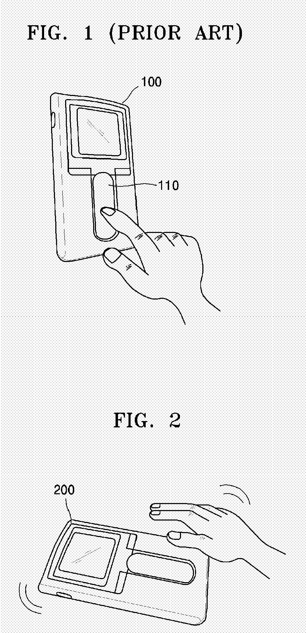

Figure 1 is a view illustrating a method of operating a conventional multimedia device 100.

Referring to Figure 1, to press a button corresponding to a desired function among buttons 110 of the multimedia device 100, a user must take the multimedia device 100 out of a pocket, for example, to push one of the buttons 110.

According to the present invention there is provided an apparatus and method as set forth in the appended claims. Preferred features of the invention will be apparent from the dependent claims, and the description which follows.

The present general inventive concept provides a method and apparatus to control an operation of a multimedia device which do not require a user to press a button thereof.

Additional aspects and advantages of the present general inventive concept will be set forth in part in the description which follows and, in part, will be obvious from the description, or may be learned by practice of the general inventive concept.

The foregoing and/or other aspects and utilities of the present general inventive concept may be achieved by providing a method of controlling operations of a multimedia device, the method including detecting an input tapping, detecting a pattern of the detected tapping, and controlling an operation of the multimedia device according to the detected pattern.

The detection of the input tapping may include sensing a sound signal of the input tapping, detecting energy of the sensed sound signal, and if the detected energy satisfies predetermined conditions, detecting the detected energy as an event.

The predetermined conditions may be a magnitude of the detected energy being greater than a predetermined level and the detected energy has a predetermined duration.

The detection of the input tapping may include sensing a pressure of the input tapping, and if a magnitude of the sensed pressure satisfies a predetermined condition, detecting the tapping as an event.

The detection of the pattern of the detected tapping may include searching a pattern storage unit for an operation of the multimedia device corresponding to the detected pattern of the tapping, and the controlling of an operation of the multimedia device may include controlling an operation of the multimedia device so as to perform the found operation of the multimedia device.

The method may further include receiving the pattern of the tapping and the operation of the multimedia device corresponding to the pattern from a user interface and storing them in a pattern storage unit.

The foregoing and/or other aspects and utilities of the present general inventive concept may also be achieved by providing a method of controlling operations of a multimedia device, the method including detecting a pattern of an input tapping and controlling an operation of the multimedia device based on the detected tapping.

The foregoing and/or other aspects and utilities of the present general inventive concept may also be achieved by providing an apparatus to control an operation of a multimedia device, the apparatus including a tapping detector to detect an input tapping, a pattern detector to detect a pattern of the detected tapping, and a controller to control an operation of the multimedia device according to the detected pattern.

The tapping detector may include a sound signal receiver to receive a sound signal of the input tapping, an energy detector to detect an energy of the sensed sound signal, and an event detector to detect the detected energy as an event when the detected energy satisfies predetermined conditions.

The predetermined conditions may include a magnitude of the detected energy is greater than a predetermined level and the detected energy has a predetermined duration.

The tapping detector may include a sensor to sense a pressure of the input tapping, and an event detector to detect the tapping as an event when the magnitude of the sensed pressure satisfies a predetermined condition.

The pattern detector may search a pattern storage unit for operations of the multimedia device corresponding to the detected pattern of the tapping, and the controller may control an operation of the multimedia device so as to perform the found operation of the multimedia device.

The pattern of the tapping and the operation of the multimedia device corresponding to the pattern may be received from a user interface and stored in the pattern storage unit.

The foregoing and/or other aspects and utilities of the present general inventive concept may also be achieved by providing an apparatus to control an operation of a multimedia device, the apparatus including a microphone to sense a sound signal of an input tapping, a low pass filter (LPF) low pass to filter the sound signal sensed by the microphone, an energy detector to detect an energy of the low pass filtered signal, an event detector to detect the detected energy as an event when the detected energy satisfies predetermined conditions, a pattern detector to detect a pattern of the tapping detected as the event, and a controller to control an operation of the multimedia device according to the detected pattern.

The foregoing and/or other aspects and utilities of the present general inventive concept may also be achieved by providing an apparatus to control operations of a multimedia device, the apparatus including a pressure sensor to sense a pressure of input tapping, an event detector to detect a signal sensed by the pressure sensor as an event when the sensed signal satisfies predetermined conditions, a pattern detector to detect a pattern of the tapping detected as the event, and a controller to control an operation of the multimedia device according to the detected pattern.

The foregoing and/or other aspects and utilities of the present general inventive concept may also be achieved by providing an apparatus to control operations of a multimedia device, including a detecting unit to detect a pattern of tappings and a control unit to control the multimedia device based on the detected pattern.

These and/or other aspects and advantages of the present general inventive concept will become apparent and more readily appreciated from the following description of the embodiments, taken in conjunction with the accompanying drawings of which:
Figure 1 is a view illustrating a method of operating a conventional multimedia device;
Figure 2 is a view illustrating a method of operating a multimedia device, according to an embodiment of the present general inventive concept;
Figure 3 is a schematic block diagram illustrating an apparatus to control an operation of a multimedia device, according to an embodiment of the present general inventive concept;
Figure 4 is a view illustrating tapping patterns stored in a pattern storage unit of Figure 3 and corresponding operations of the multimedia device according to an embodiment of the present general inventive concept;
Figure 5 is a schematic block diagram illustrating an apparatus to control operations of a multimedia device, according to an embodiment of the present general inventive concept;
Figure 6 is a signal diagram illustrating a continuous 'tap' 'tap' pattern;
Figure 7 is a view illustrating an apparatus to control an operation of a multimedia device, according to another embodiment of the present general inventive concept;
Figure 8 is a flowchart illustrating a method of controlling operations of a multimedia device according to an embodiment of the present general inventive concept;
Figure 9 is a flowchart illustrating the method of Figure 8;
Figure 10 is a flowchart illustrating the method of Figure 8; and
Figure 11 is a schematic block diagram illustrating an apparatus to control operations of a multimedia device, according to an embodiment of the present general inventive concept.

Reference will now be made in detail to the embodiments of the present general inventive concept, examples of which are illustrated in the accompanying drawings, wherein like reference numerals refer to the like elements throughout. The embodiments are described below in order to explain the present general inventive concept by referring to the figures.

Figure 2 is a view illustrating a method of operating a multimedia device 200, according to an embodiment of the present general inventive concept.

Referring to Figure 2, a user can control an operation of the multimedia device 200 not by pressing a button of a multimedia device but by tapping the multimedia device 200 with a finger or other instrument. An operation of a user tapping the multimedia device 200 with a palm, finger, or other instrument is defined as "tapping," and various devices may be used to sense the user's tapping. The present general inventive concept is characterized not by the type of sensing devices used to sense the user's tapping but by the fact that the operation of the multimedia device 200 can be controlled via a tapping operation. Thus, it will be fully understood by those of ordinary skill in the art that any device that can properly sense the user's tapping can be used.

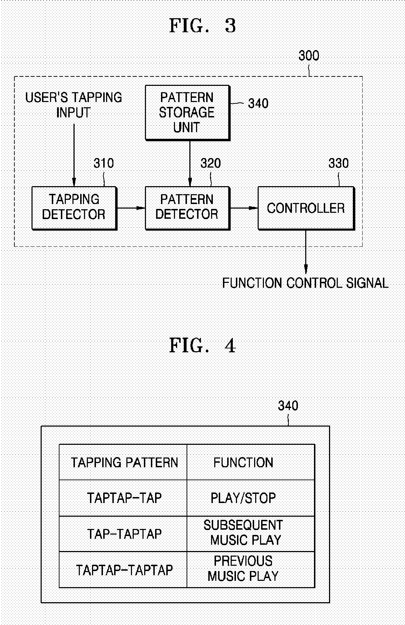

Figure 3 is a schematic block diagram illustrating an apparatus 300 to control operations of a multimedia device, according to an embodiment of the present general inventive concept.

Referring to Figure 3, the apparatus 300 includes a tapping detector 310, a pattern detector 320, and a controller 330.

The apparatus 300 is installed inside the multimedia device and controls the operation of the multimedia device. The apparatus 300 receives a tapping input signal corresponding to a tapping of a user, processes the received tapping input signal, and outputs an operation control signal to other components inside the multimedia device based on the processed tapping input signal.

The tapping detector 310 receives the tapping input signal and detects the user's tapping. As described above, the tapping detector 310 to detect the user's tapping can be any device that can properly sense tapping of the user.

The pattern detector 320 detects a pattern of the tapping detected by the tapping detector 310. A pattern storage unit 340 stores the tapping patterns and operations of the multimedia device corresponding to the patterns. The pattern detector 320 searches for the operation of the multimedia device corresponding to the detected tapping by referring to data stored in the pattern storage unit 340 and outputs a signal corresponding to the found operation of the multimedia device to the controller 330.

The controller 330 outputs an operation control signal to control the operation of the multimedia device to an operation execution unit (not shown) of the multimedia device according to the pattern detected by the pattern detector 320.

Figure 4 is a view illustrating tapping patterns stored in the pattern storage unit 340 and corresponding operations of the multimedia device of Figure 3.

Referring to Figure 4, the pattern storage unit 340 stores predetermined tapping patterns and corresponding multimedia device operations. For example, when operations of a MP3 player are controlled, the tapping pattern for each operation is pre-defined and used in a manner such that a tapping pattern of "TapTap-Tap", i.e., tapping twice, waiting, and tapping once, denotes a play/stop operation, a tapping pattern of "Tap-TapTap", i.e., tapping once, waiting, and tapping twice, denotes a subsequent music play operation, and a tapping pattern of "TapTap-TapTap", i.e., tapping twice, waiting, and tapping twice, denotes a previous music play operation.

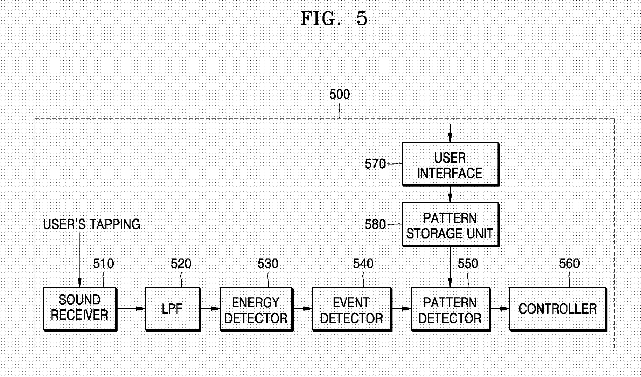

Figure 5 is a schematic block diagram illustrating an apparatus 500 to control an operation of a multimedia device according to an embodiment of the present general inventive concept.

Referring to Figure 5, the apparatus 500 to control the operation of the multimedia device includes a sound receiver 510, a low pass filter (LPF) 520, an energy detector 530, an event detector 540, a pattern detector 550, a controller 560, a user interface 570, and a pattern storage unit 580.

The sound receiver 510 receives a tapping signal input by a user. A microphone may be used as the sound receiver 510.

The LPF 520 receives the tapping signal from the sound receiver 510 and low pass filters the tapping signal. That is, since only an ultra low frequency signal is needed to discriminate the tapping signal from other signals, the received tapping signal is low pass filtered to recognize only the tapping signal to remove unnecessary noises, such as people's voices. A cut-off frequency of the LPF 520 is assigned within a range of an ultra low frequency, e.g., 100Hz or 50Hz.

The energy detector 530 receives a signal having only a portion necessary to recognize a 'Tap', which was low passed by the LPF 520, (i.e., a filtered tap pattern or filtered tapping signal) and detects energy of the signal. In more detail, the energy detector 530 identifies a signal lasting for over a predetermined time with a level greater than a specific threshold level.

The event detector 540 determines whether an input signal satisfies conditions of a 'Tap' using a magnitude of energy of the input signal and a duration of the input signal. For example, when the magnitude of energy of the input signal is greater than a specific value using a root mean square (RMS) energy calculator and the duration is greater than 10msec, the input signal is determined as an event, i.e., a 'Tap'. If the input signal does not satisfy the conditions, the input signal is determined to not be the 'Tap,' and is therefore ignored.

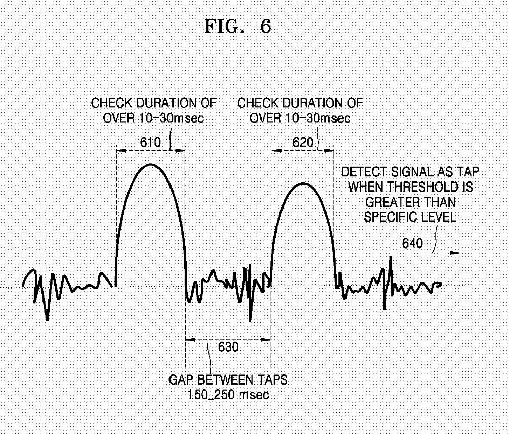

Figure 6 is a signal diagram illustrating a continuous 'tap' 'tap'. Referring to Figure 6, to recognize a signal as the 'Tap' , conditions that a threshold of the tapping signal must be greater than a specific level 640, a duration of the tapping signal must be greater than, for example, 10-30 msec, and a gap 630 between 'Tap' and 'Tap' must be within 150-250 msec can be set. Figure 6 illustrates a signal of two continuous tapping signals, 'Tap 610' and 'Tap 620' that satisfy the 'Tap' conditions.

Referring to Figure 5, the pattern detector 550 detects a pattern of the signal determined as the 'Tap', searches for an operation corresponding to the tapping sequence of the signal, and outputs a signal corresponding to the found operation to the controller 560. The pattern detector 550 searches for the operation of the multimedia device corresponding to the detected tapping pattern using information on tapping patterns and operations of the multimedia device corresponding to the tapping patterns, which is stored in the pattern storage unit 580.

The pattern storage unit 580 may store, for instance, the information illustrated in Figure 4. If a simple tapping pattern, i.e., a single 'Tap' or double 'Taps', is used, the tapping pattern can be confused with a signal similar to the single 'Tap', which is generated by accidentally hitting the multimedia device. Thus, patterns containing several 'Taps' may be used as the tapping patterns.

For the tapping patterns, information pre-set in the pattern storage unit 580 when the multimedia device was manufactured can be used, or the user can set desired tapping patterns and corresponding operations through the user interface 570, similar to a method of setting an equalizer. In addition, to more clearly discriminate the 'Tap,' according to the present general inventive concept from a signal generated by accidentally hitting the multimedia device that the user is carrying against another person or an object, it is possible that an error which can occur when a tapping pattern is detected may be reduced by delimiting a temporal gap between taps within 100-150 msec.

To perform the operation corresponding to the detected pattern, the controller 560 receives the information of the operation corresponding to the detected pattern from the pattern detector 550 and outputs a control signal to perform the operation to each corresponding operation execution unit (not shown). Since the operation execution unit, which has received the control signal, performs the operation according to the control signal, the operation of the multimedia device can be controlled by the tapping signal of the user.

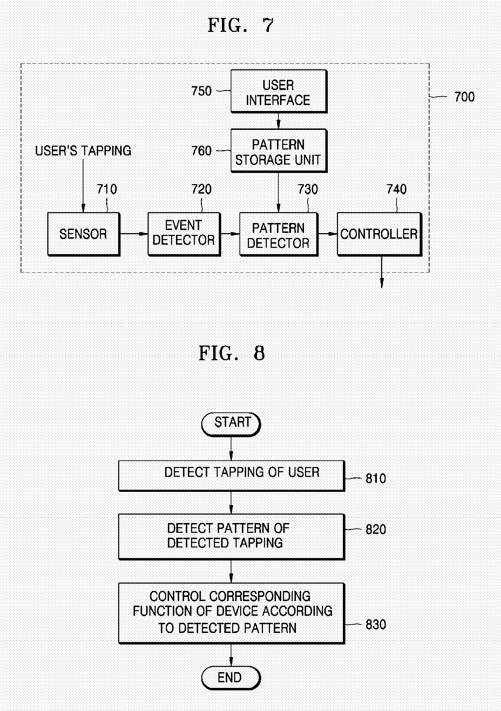

Figure 7 is a schematic block diagram illustrating an apparatus 700 to control operations of a multimedia device, according to another embodiment of the present general inventive concept.

Referring to Figure 7, the apparatus 700 to control the operations of the multimedia device includes a sensor 710, an event detector 720, a pattern detector 730, a controller 740, a user interface 750, and a pattern storage unit 760.

Since operations of the event detector 720, the pattern detector 730, the controller 740, and the user interface 750 are similar to those of corresponding components of the apparatus 500 of Figure 5, a description of these components is omitted.

The sensor 710 senses a tapping signal input by a user, and a pressure sensor, for instance, can be used as the sensor 710. A signal generated by sensing the user's tapping is output to the event detector 720 and used to control an operation of the multimedia device.

The operation of detecting a tapping signal of the user in the multimedia device may be turned on/off according to whether the user uses the multimedia device by carrying it while being out, i.e., traveling, or by staying somewhere, i.e., at home or in an office.

In addition, since a power of the multimedia device to control the operation of the multimedia device using a tapping signal is mostly consumed by a digital signal processing (DSP) unit and not by a microphone or a sensor, and since any display unit is not necessary to use the tapping detection, the microphone or sensor to detect the user's tapping may always be active when the tapping detection operation is turned on.

Figure 8 is a flowchart illustrating a method of controlling an operation of a multimedia device according to an embodiment of the present general inventive concept.

An apparatus to control an operation of a multimedia device (hereinafter, a control apparatus) detects tapping of a user in Operation 810. To control the portable multimedia device, the user taps the portable multimedia device by hand. To detect the user's tapping, for example, a microphone or a sensor installed in the multimedia device can be used.

In Operation 820, the control apparatus detects a pattern of the detected tapping.

In Operation 830, the control apparatus controls a corresponding operation according to the detected pattern.

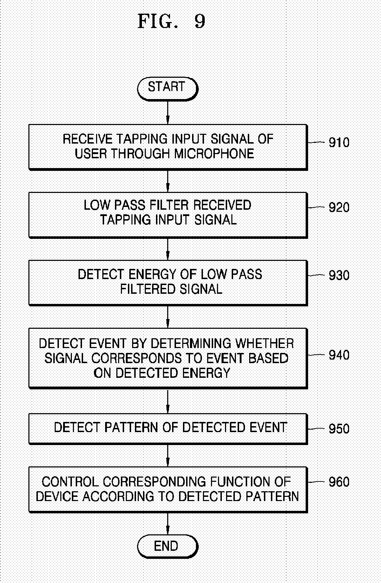

Figure 9 is a flowchart illustrating the method of Figure 8, when the multimedia device includes the microphone.

Referring to Figure 9, the control apparatus receives a tapping input signal corresponding to tapping of the user through the microphone in Operation 910.

The control apparatus low pass filters the received tapping input signal in Operation 920, detects energy of the low pass filtered signal in Operation 930, and detects an event by determining whether the received signal corresponds to the event, i.e., tapping, based on the detected energy in Operation 940. If the received signal is determined as the event, an operation of the multimedia device is controlled in subsequent operations, but if the received signal is not determined as the event, the received signal is ignored.

The control apparatus detects the pattern of the detected event in Operation 950 and controls the operation of the multimedia device according to the detected pattern in Operation 960.

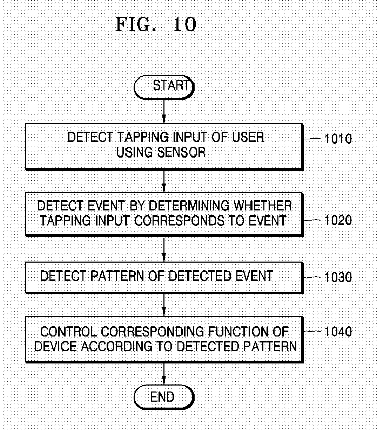

Figure 10 is a flowchart illustrating the method of Figure 8, when the multimedia device includes the sensor.

Referring to Figure 10, the control apparatus senses a tapping input of the user using a sensor in Operation 1010.

The control apparatus detects an event by determining whether the tapping input corresponds to an event, i.e., tapping, in Operation 1020, detects a pattern of the detected event in Operation 1030, and controls an operation of the multimedia device according to the detected pattern in Operation 1040.

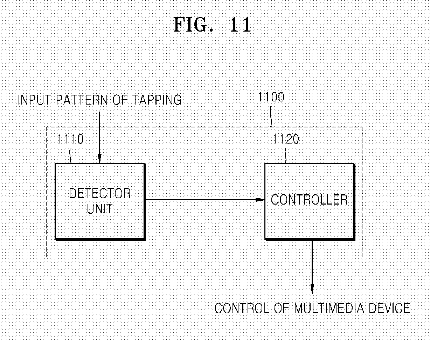

Figure 11 is a schematic block diagram illustrating an apparatus 1100 to control an operation of a multimedia device according to an embodiment of the present general inventive concept. Referring to Figure 11, the apparatus 1100 to control the operation of the multimedia device includes a detector unit 1110 and a controller 1120. The detector unit 1110 detects a pattern of tapping input to the multimedia device by a user. The controller 1120 controls the multimedia device based on the detected pattern of tapping. The multimedia device may also include a pattern storage unit to store a plurality of the patterns of tapping and corresponding commands. The multimedia device may also include a pattern detector to compare the detected pattern of the tapping to the stored plurality of patterns of tapping. The controller 1120 can control the multimedia device based on the commands corresponding to the stored patterns of tapping.

The method of controlling an operation of a multimedia device of an embodiment of the present general inventive concept can be applied to portable and fixed devices, such as MP3 players, radios, and cell phones.

As described above, by an apparatus to control operations of a multimedia device according to embodiments of the present general inventive concept, a user can easily operate the multimedia device without having to take the multimedia device out of a pocket.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of controlling operations of a multimedia device, the method comprising:
detecting an input tapping;
detecting a pattern of the detected tapping; and
controlling an operation of the multimedia device according to the detected pattern.

2. The method of claim 1, wherein the step of detecting an input tapping comprises:
sensing a sound signal of the input tapping;
detecting energy of the sensed sound signal; and
if the detected energy satisfies predetermined conditions, detecting the detected energy as an event.

3. The method of claim 2, wherein the predetermined conditions is a magnitude of the detected energy being greater than a predetermined level and the detected energy has a predetermined duration.

4. The method of claim 1, wherein the step of detecting an input tapping comprises:
sensing a pressure of the input tapping; and
if a magnitude of the sensed pressure satisfies a predetermined condition, detecting the tapping as an event.

5. The method of any of claims 1 to 4, wherein:
the detection of the pattern of the detected tapping comprises searching a pattern storage unit (340) for an operation of the multimedia device corresponding to the detected pattern of the tapping; and
the controlling of an operation of the multimedia device comprises controlling an operation of the multimedia device so as to perform the found operation of the multimedia device.

6. The method of claim 5, further comprising:
receiving the pattern of the tapping and the operation of the multimedia device corresponding to the pattern from a user interface and storing them in a pattern storage unit (340).

7. A method of controlling operations of a multimedia device, the method comprising:
detecting a pattern of an input tapping; and
controlling an operation of the multimedia device based on the detected tapping.

8. An apparatus to control an operation of a multimedia device, the apparatus comprising:
a tapping detector (310) to detect an input tapping;
a pattern detector (320) to detect a pattern of the detected tapping; and
a controller (330) to control an operation of the multimedia device according to the detected pattern.

9. The apparatus of claim 8, wherein the tapping detector (310) comprises:
a sound signal receiver (510) to receive a sound signal of the input tapping;
an energy detector (530) to detect an energy of the sensed sound signal; and
an event detector (540) to detect the detected energy as an event when the detected energy satisfies predetermined conditions.

10. The apparatus of claim 9, wherein the predetermined conditions comprise a magnitude of the detected energy is greater than a predetermined level and the detected energy has a predetermined duration.

11. The apparatus of claim 8, wherein the tapping detector (310) comprises:
a sensor (710) to sense a pressure of the input tapping; and
an event detector (720) to detect the tapping as an event when the magnitude of the sensed pressure satisfies a predetermined condition.

12. The apparatus of any of claims 8 to 11, wherein:
the pattern detector (320) searches a pattern storage unit (340) for operations of the multimedia device corresponding to the detected pattern of the tapping; and
the controller (330) controls an operation of the multimedia device so as to perform the found operation of the multimedia device.

13. The apparatus of claim 12, wherein the pattern of the tapping and the operation of the multimedia device corresponding to the pattern are received from a user interface and stored in the pattern storage unit (340).

14. The apparatus of any of claims 8 to 13, wherein the multimedia device is a portable multimedia device.

15. An apparatus (500) to control operations of a multimedia device, the apparatus (500) comprising:
a microphone (510) to sense a sound signal of an input tapping;
a low pass filter (LPF) (520) low pass to filter the sound signal sensed by the microphone (510);
an energy detector (530) to detect an energy of the low pass filtered signal;
an event detector (540) to detect the detected energy as an event when the detected energy satisfies predetermined conditions;
a pattern detector (550) to detect a pattern of the tapping detected as the event; and
a controller (560) to control an operation of the multimedia device according to the detected pattern.

16. An apparatus (700) to control an operation of a multimedia device, the apparatus comprising:
a pressure sensor (710) to sense a pressure of input tapping;
an event detector (720) to detect a signal sensed by the pressure sensor (710) as an event when the sensed signal satisfies predetermined conditions;
a pattern detector (730) to detect a pattern of the tapping detected as the event; and
a controller (740) to control an operation of the multimedia device according to the detected pattern.

17. An apparatus to control operations of a multimedia device, comprising:
a detecting unit (310, 320) to detect a pattern of tappings; and
a control unit (330) to control the multimedia device based on the detected pattern.

18. The apparatus of claim 17, further comprising:
a pattern storage unit (340) to store a plurality of patterns and a plurality of commands corresponding to respective ones of the plurality of patterns.

19. The multimedia device of claim 18, further comprising:
a pattern detector (320) to compare the detected pattern to the plurality of stored patterns,
wherein the control unit (330) controls the multimedia device according to a command of the plurality of commands corresponding to the detected pattern.

20. The multimedia device of claim 17, wherein the detecting unit (310, 320) comprises:
an input device (510) to receive the detected patterns, the detected patterns having a frequency; and
a low pass filter (520) to remove a portion of the detected patterns having a frequency outside a predetermined frequency range.

21. The multimedia device of claim 20, wherein the predetermined frequency range is 50Hz to 100Hz.

22. The multimedia device of claim 20, wherein the input device (510) comprises a microphone.

23. The multimedia device of claim 20, further comprising:
an event detector (540) to determine if the filtered detected patterns satisfies a predetermined condition.

24. The multimedia device of claim 23, wherein the predetermined condition of the event detector (540) includes at least one of a magnitude of energy of the input and a duration of the input.
